# FASCICULE DE BREVET EUROPEEN

(11) **EP 3 751 359 B1**
(45) Date de publication et mention de la délivrance du brevet: **24.07.2024**
(21) Numéro de dépôt: 19179728.1
(22) Date de dépôt: 12.06.2019
(51) Int. Cl.: G04G 21/04, G04R 60/04, G04R 60/06, H01Q 1/27

(54) **AGENCEMENT D'ANTENNE, PIECE D'HABILLAGE HORLOGER COMPRENANT UN TEL AGENCEMENT D'ANTENNE ET PROCEDE DE FABRICATION D'UNE TELLE PIECE D'HABILLAGE HORLOGER**
ANTENNENANORDNUNG, VERKLEIDUNGSTEIL EINER UHR, DIE EINE SOLCHE ANTENNENANORDNUNG UMFASST, UND HERSTELLUNGSVERFAHREN EINES SOLCHEN UHRENVERKLEIDUNGSTEILS
ANTENNA ARRANGEMENT, CLOCK CASING PART COMPRISING SUCH AN ANTENNA ARRANGEMENT AND METHOD FOR MANUFACTURING SUCH A CLOCK CASING PART

(43) Date de publication de la demande: 16.12.2020
(73) Titulaire: The Swatch Group Research and Development Ltd, 2074 Marin (CH)
(72) Inventeur: FRANÇOIS, Nicolas, 2000 Neuchâtel (CH); SCORDILIS, Thierry, 2036 Cormondrèche (CH); RANDJELOVIC, Zoran, 2035 Corcelles (CH)
(74) Mandataire: ICB SA

(56) Documents cités:
- WO-A1-2017/111385
- US-A1- 2010 199 903
- US-A1- 2017 018 843
- PARACHA KASHIF NISAR ET AL: "Wearable Antennas: A Review of Materials, Structures, and Innovative Features for Autonomous Communication and Sensing", IEEE ACCESS, vol. 7, 13 May 2019 (2019-05-13), pages 56694 - 56712, XP011724066, DOI: 10.1109/ACCESS.2019.2909146

## Description

### DOMAINE TECHNIQUE DE L'INVENTION

L'invention concerne un agencement d'antenne pour une pièce d'habillage horloger. Un tel agencement d'antenne peut par exemple permettre une communication bidirectionnelle de données avec d'autres objets électroniques connectés.

L'invention concerne également une pièce d'habillage horloger comprenant un tel agencement d'antenne, ainsi qu'un procédé de fabrication d'une telle pièce d'habillage horloger. La pièce d'habillage horloger est par exemple une lunette de montre, un bracelet de montre, un cadran de montre, ou encore une carrure de boîte de montre.

L'invention concerne enfin une pièce d'horlogerie comprenant une telle pièce d'habillage horloger. La pièce d'horlogerie est par exemple une montre.

### ETAT DE LA TECHNIQUE

Il est connu de munir une pièce d'horlogerie, par exemple une montre, d'une antenne connectée à un circuit intégré d'émission et/ou de réception. Une telle antenne offre alors à la pièce d'horlogerie de nouvelles fonctionnalités permettant une communication avec son environnement. L'antenne est alors typiquement constituée d'une masse monobloc solide conductrice de l'électricité. Un tel agencement d'antenne pour montre est par exemple décrit dans le brevet EP 1 378 805 B1. L'antenne présente alors la forme d'un anneau disposé à la périphérie de la carrure de la montre, et le circuit intégré d'émission et/ou de réception est logé dans la carrure. La masse monobloc solide, constitutive de l'antenne, forme alors en même temps la lunette de la montre.

Toutefois, un inconvénient de l'agencement d'antenne proposé dans le brevet EP 1 378 805 B1 est qu'il est particulièrement vulnérable aux influences extérieures, telles que par exemple l'humidité, les chocs mécaniques, les conditions de température. En plus, cet agencement d'antenne impose des modifications de design des pièces de la montre, ce qui peut nuire à son esthétisme. En outre, la connexion avec le circuit intégré nécessite de percer la carrure, ce qui rend complexe l'assemblage de l'ensemble. Un tel agencement d'antenne nuit ainsi à la fiabilité de la montre.

D'autres réalisations de pièces d'horlogerie comprennent une antenne à l'intérieur de la boîte de montre. Toutefois, dans de telles réalisations où l'antenne est formée d'une masse monobloc, l'antenne requiert de la place à l'intérieur du boîtier car elle présente un encombrement relativement important. Ceci participe à alourdir la pièce d'habillage horloger, tout en rendant plus complexe la construction du mouvement.

Le document de PARACHA KASHIF NISAR et AL du 3 avril 2019 et intitulé "Wearable Antennas : a Review of Materials, Structure, and Innovative Features for Autonomous Communication and Sensing" décrit des fils conducteurs qui fonctionnent comme une antenne portable en étant brodés par une machine sur un tissu textile non conducteur. Le dispositif portable la comprenant, peut être une montre. Les fils conducteurs peuvent être brodés sur tissu de fils isolants ou fibres naturelles.

Le document WO 2017/111385 A1 décrit un dispositif électronique sous la forme d'une montre-bracelet, qui est composée d'une pièce d'horlogerie avec une pièce d'habillage horloger (boîte ou bracelet). La pièce d'habillage comprend une antenne disposée dans le bracelet ou sur la boîte de montre et reliée à un circuit intégré, qui peut être une puce NFC.

### RESUMÉ DE L'INVENTION

L'invention a donc pour but de fournir et fabriquer un agencement d'antenne pour une pièce d'habillage horloger, pouvant être installée à l'intérieur de la pièce afin de la préserver des influences extérieures, tout en étant simple à installer et peu encombrante, et en permettant une communication fiable de données avec des objets électroniques connectés.

A cet effet, l'invention concerne un procédé de fabrication d'une pièce d'habillage horloger comprenant un agencement d'antenne relié à un circuit intégré radiofréquences, qui comprend les caractéristiques mentionnées dans la revendication indépendante 1.

Des formes particulières du procédé sont définies dans les revendications dépendantes 2 et 3.

Grâce à la broderie technique qui forme l'agencement d'antenne selon l'invention, cet agencement peut être aisément installé au sein d'une pièce d'habillage horloger. Une telle broderie technique, qui est une forme en deux dimensions développée de la pièce d'horlogerie et qui comprend une structure brodée de fils isolants ou fibres naturelles et au moins un fil conducteur brodé dans un bobinage fin, est en effet particulièrement peu encombrante, tout en offrant une fiabilité de fonctionnement pour l'antenne constituée du fil conducteur. En outre, une telle broderie technique se prête particulièrement bien à la réalisation de pièces d'habillage horloger en matériau composite, notamment en un matériau combinant la broderie technique et une résine solidifiée, qui peut être typiquement une résine thermodurcissable ou une résine élastomère.

A cet effet, l'invention concerne également une pièce d'habillage horloger obtenu selon le procédé de fabrication pour une pièce d'horlogerie, la pièce d'habillage comportant l'agencement d'antenne et le circuit intégré radiofréquences selon les caractéristiques de la revendication indépendante 4..

Des formes particulières de la pièce d'habillage horloger sont définies dans les revendications dépendantes 5 à 10.

Selon une caractéristique technique particulière de l'invention, la pièce d'habillage horloger est constituée d'une structure souple, notamment une structure en tissu.

Avantageusement, la pièce d'habillage horloger est constituée d'une structure composite comprenant la broderie technique et une résine solidifiée, et renfermant le circuit intégré radiofréquences. Une telle structure composite permet d'obtenir une pièce d'habillage horloger particulièrement résistante et légère. En outre, l'utilisation d'une telle structure composite permet d'obtenir un matériau qui ne forme pas écran vis-à-vis des champs magnétique et électrique de l'antenne.

### BRÈVE DESCRIPTION DES FIGURES

Les buts, avantages et caractéristiques de l'agencement d'antenne pour pièce d'habillage horloger selon l'invention apparaîtront mieux dans la description suivante sur la base d'au moins une forme d'exécution non limitative illustrée par les dessins sur lesquels :
- la figure 1 est une vue en perspective d'une montre comprenant une lunette annulaire, la lunette annulaire étant munie d'un agencement d'antenne selon l'invention ;
- la figure 2 est une vue schématique de l'intérieur de la lunette de la figure 1, selon un mode de réalisation particulier de l'agencement d'antenne selon l'invention ; et
- la figure 3 est un organigramme représentant des étapes d'un procédé de fabrication d'une pièce d'habillage horloger selon l'invention.

### DESCRIPTION DETAILLEE DE L'INVENTION

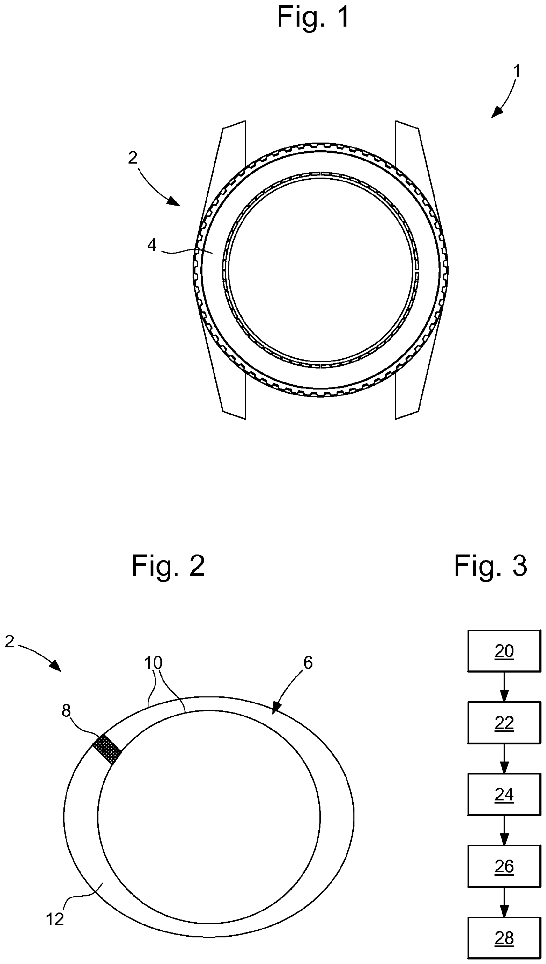

La figure 1 représente une montre 1 munie d'une lunette annulaire 2. La lunette annulaire 2 est montée sur une carrure de la montre sommairement représentée sur les figures pour des raisons de clarté.

La lunette annulaire 2 est constituée d'une structure composite comprenant une résine solidifiée 4. Comme illustré sur la figure 2, la structure composite comprend en outre une broderie technique 6, et renferme un circuit intégré radiofréquences 8 d'émission et/ou de réception. Dans l'exemple de réalisation particulier illustré sur la figure 1, la résine solidifiée 4 est une résine thermodurcissable. La résine 4 est par exemple une résine de matériau plastique. En variante non représentée, la résine solidifiée 4 est une résine élastomère. La résine 4 est par exemple du caoutchouc.

La broderie technique 6 constitue un agencement d'antenne. La broderie technique 6 comprend une structure brodée de fils isolants ou fibres naturelles 10 et au moins un fil conducteur 12 brodé de manière à réaliser un bobinage fin intégré dans la structure brodée de fils isolants ou fibres naturelles 10. Dans l'exemple de réalisation particulier illustré sur la figure 2, la broderie technique 6 comprend un seul fil conducteur 12. Le fil conducteur 12, qui forme l'antenne en elle-même, est relié au circuit intégré radiofréquences 8. En variante non représentée, la broderie technique 6 comprend plusieurs fils conducteurs 12. Dans ce cas, les fils conducteurs 12 forment par exemple une bobine à plusieurs spires, chacun des fils conducteurs 12 étant relié au circuit intégré radiofréquences 8. Une telle variante de réalisation est notamment avantageuse dans le cas où le circuit intégré radiofréquences 8 est une puce de communication en champ proche NFC (de l'anglais Near Field Communication), par exemple afin d'augmenter l'inductance de l'antenne pour adapter en fréquence le circuit intégré 8 en jouant sur le nombre de spires.

Les fils conducteurs 12 peuvent être en métal ou en carbone ou en silicone modifié par exemple.

De préférence, les fils isolants 10 présentent une résistivité électrique, qui peut être par exemple supérieure à 10⁸ Ohm·m. Dans l'exemple de réalisation particulier illustré sur la figure 2, les fils isolants 10 sont des fibres de verre. En variante non représentée, les fils isolants 10 peuvent être des fils synthétiques, tels que par exemple des fils en polyamide ou en polyester, ou encore des fibres céramiques.

Dans une variante de la structure brodée, les fibres naturelles 10 peuvent être constituées par exemple de lin ou de chanvre ou de coton ou d'une combinaison de ces composants.

Le circuit intégré radiofréquences 8 est par exemple une puce de communication sans contact. Dans l'exemple de réalisation particulier de la figure 2, le circuit intégré radiofréquences 8 est une puce de radio-identification RFID (de l'anglais Radio Frequency Identification). En variante non représentée, le circuit intégré radiofréquences 8 est une puce de communication en champ proche NFC ou pour effectuer des transactions ou des paiements bancaires.

Un procédé de fabrication d'une pièce d'habillage horloger comprenant l'agencement d'antenne 6 selon l'invention va maintenant être décrit en référence à la figure 3. La pièce d'habillage horloger est par exemple la lunette annulaire 2 illustrée sur les figures 1 et 2. En variante non représentée, la pièce d'habillage horloger peut être un bracelet de montre, un cadran de montre, ou encore une carrure de boîte de montre.

Le procédé comprend une étape initiale 20 au cours de laquelle la broderie technique 6 est ajustée dans un moule de la pièce d'habillage horloger à réaliser. Au cours de cette étape initiale, le ou chaque fil conducteur 12 de la broderie technique 6 est relié au circuit intégré radiofréquences 8, qui a été préalablement inséré dans le moule.

Au cours d'une étape suivante 22, une résine 4 est injectée dans le moule de manière à imprégner la broderie technique 6 et le circuit intégré radiofréquences 8.

Au cours d'une étape suivante 24, on fait cuire la résine 4 contenue dans le moule. Lorsque la résine 4 est une résine thermodurcissable, comme dans l'exemple de réalisation de la figure 1, la température de cuisson est de préférence comprise entre 200°C et 250°C. Lorsque la résine 4 est une résine élastomère, la température de cuisson est de préférence sensiblement égale à 300°C.

Au cours d'une étape suivante 26, on réticule la résine 4 contenue dans le moule.

Au cours d'une étape finale 28, on démoule l'ensemble formé de la broderie technique 6, du circuit intégré radiofréquences 8 et de la résine 4 réticulée. On obtient ainsi la pièce d'habillage horloger selon un mode de réalisation particulier de l'invention.

Bien que l'invention ait été décrite en référence à une pièce d'habillage horloger, en l'occurrence une lunette annulaire 2, constituée d'une structure composite comprenant une résine solidifiée 4, d'autres variantes de réalisation sont possibles pour la pièce d'habillage horloger, sans sortir du cadre de l'invention. En particulier, la pièce d'habillage horloger peut être constituée d'une structure souple, notamment une structure en tissu. Dans ce cas, la pièce d'habillage horloger est typiquement un bracelet de montre, et ne comprend plus de résine solidifiée. Selon une autre variante de réalisation, la pièce d'habillage horloger est constituée d'une base en céramique. La pièce d'habillage horloger, qui est typiquement une lunette de montre, comprend par un exemple un anneau creux en céramique à l'intérieur duquel l'agencement d'antenne 6 et le circuit intégré 8 sont reçus. Un anneau de caoutchouc vient alors refermer l'anneau creux en céramique, permettant d'obtenir la lunette de montre.

## Revendications

1. Procédé de fabrication d'une pièce d'habillage horloger (2) comprenant un agencement d'antenne (6) constitué d'une broderie technique relié à un circuit intégré radiofréquences (8), la broderie technique (6) comprenant une structure brodée de fils isolants, tels que des fibres de verre, des fils synthétiques et des fibres céramiques, ou fibres naturelles (10), tels que du lin, du chanvre ou du coton ou une combinaison de ces composants, et au moins un fil conducteur (12) brodé de manière à réaliser un bobinage fin intégré dans ladite structure brodée de fils isolants ou fibres naturelles (10), le procédé comprenant les étapes suivantes :
- ajuster (20) la broderie technique (6) dans un moule de la pièce d'habillage horloger à réaliser, et relier ledit au moins un fil conducteur (12) à un circuit intégré radiofréquences (8) inséré dans le moule ;
- injecter (22) une résine (4) dans le moule de manière à imprégner la broderie technique (6) et le circuit intégré radiofréquences (8) ;
- faire cuire (24) la résine (4) contenue dans le moule ;
- réticuler (26) la résine (4) contenue dans le moule ; et
- démouler (28) l'ensemble formé de la broderie technique (6), du circuit intégré radiofréquences (8) et de la résine (4) réticulée.

2. Procédé selon la revendication 1, **caractérisé en ce que** la résine (4) est une résine thermodurcissable, et **en ce que**, lors de l'étape (24) de cuisson de la résine, la température de cuisson est comprise entre 200°C et 250°C.

3. Procédé selon la revendication 1, **caractérisé en ce que** la résine (4) est une résine élastomère, et **en ce que**, lors de l'étape (24) de cuisson de la résine, la température de cuisson est sensiblement égale à 300°C.

4. Pièce d'habillage horloger (2) obtenue par le procédé de fabrication selon l'une des revendications précédentes, et comprenant un agencement d'antenne (6) et un circuit intégré radiofréquences (8) pour une pièce d'horlogerie (1), au moins un fil conducteur (12) de l'agencement d'antenne étant relié au circuit intégré radiofréquences (8).

5. Pièce d'habillage horloger (2) selon la revendication 4, **caractérisée en ce que** le circuit intégré radiofréquences (8) est une puce de communication sans contact, notamment une puce de radio-identification RFID ou une puce de communication en champ proche NFC.

6. Pièce d'habillage horloger (2) selon la revendication 4, **caractérisée en ce que** le circuit intégré radiofréquences (8) est une puce de communication en champ proche NFC pour effectuer des transactions ou des paiements bancaires.

7. Pièce d'habillage horloger (2) selon la revendication 4, **caractérisée en ce que** la pièce d'habillage horloger est constituée d'une structure souple, notamment une structure en tissu.

8. Pièce d'habillage horloger (2) selon la revendication 7, **caractérisée en ce que** la pièce d'habillage horloger est un bracelet de montre.

9. Pièce d'habillage horloger (2) selon la revendication 4, **caractérisée en ce que** la pièce d'habillage horloger (2) est constituée d'une structure composite comprenant la broderie technique (6) et une résine (4) solidifiée, et renfermant le circuit intégré radiofréquences (8).

10. Pièce d'habillage horloger (2) selon la revendication 9, **caractérisée en ce que** la pièce d'habillage horloger (2) est une pièce choisie parmi le groupe consistant en une lunette de montre, un bracelet de montre, un cadran de montre, et une carrure de boîte de montre.

## Patentansprüche

1. Verfahren zur Herstellung eines Uhrenkleidungsstücks (2) mit einer Antennenanordnung (6), die aus einer technischen Stickerei besteht, die mit einer integrierten Hochfrequenzschaltung (8) verbunden ist, wobei die technische Stickerei (6) eine bestickte Struktur aus isolierenden Fäden, wie Glasfasern, synthetischen Fäden und Keramikfasern, umfasst, oder Naturfasern (10), wie Flachs, Hanf oder Baumwolle oder eine Kombination dieser Komponenten, und mindestens einen leitenden Faden (12), der so gestickt ist, dass er eine feine Wicklung bildet, die in die gestickte Struktur aus isolierenden Fäden oder Naturfasern (10) integriert ist, wobei das Verfahren die folgenden Schritte umfasst:
- Einpassen (20) der technischen Stickerei (6) in eine Form des herzustellenden Uhrenkleidungsstücks und Verbinden des mindestens einen leitenden Fadens (12) mit einer integrierten Hochfrequenzschaltung (8), der in die Form eingesetzt wird;
- Einspritzen (22) eines Harzes (4) in die Form, um die technische Stickerei (6) und die integrierte Hochfrequenzschaltung (8) zu imprägnieren;
- Aushärten (24) des in der Form enthaltenen Harzes (4);
- Vernetzen (26) des in der Form enthaltenen Harzes (4) vernetzen; und
- Entformen (28) der aus der technischen Stickerei (6), der integrierten Hochfrequenzschaltung (8) und dem vernetzten Harz (4) gebildeten Einheit.

2. Verfahren nach Anspruch 1, **dadurch gekennzeichnet, dass** das Harz (4) ein wärmehärtendes Harz ist und dass in dem Schritt (24) des Aushärtens des Harzes die Aushärtetemperatur zwischen 200 °C und 250 °C liegt.

3. Verfahren nach Anspruch 1, **dadurch gekennzeichnet, dass** das Harz (4) ein elastomeres Harz ist und dass in dem Schritt (24) des Aushärtens des Harzes die Aushärtetemperatur im Wesentlichen 300 °C beträgt.

4. Uhrenkleidungsstück (2), das durch das Verfahren zur Herstellung nach einem der vorhergehenden Ansprüche erhalten wird und eine Antennenanordnung (6) und eine integrierte Hochfrequenzschaltung (8) für ein Uhrenstück (1) umfasst, wobei mindestens ein leitender Draht (12) der Antennenanordnung mit der integrierten Hochfrequenzschaltung (8) verbunden ist.

5. Uhrenkleidungsstück (2) nach Anspruch 4, **dadurch gekennzeichnet, dass** die integrierte Hochfrequenzschaltung (8) ein kontaktloser Kommunikationschip ist, insbesondere ein RFID-Radioidentifikationschip oder ein NFC-Nahfeldkommunikationschip.

6. Uhrenkleidungsstück (2) nach Anspruch 4, **dadurch gekennzeichnet, dass** die integrierte Hochfrequenzschaltung (8) ein NFC-Nahfeldkommunikationschip zur Durchführung von Banktransaktionen oder -zahlungen ist.

7. Uhrenkleidungsstück (2) nach Anspruch 4, **dadurch gekennzeichnet, dass** das Uhrenkleidungsstück aus einer flexiblen Struktur, insbesondere einer Stoffstruktur, besteht.

8. Uhrenkleidungsstück (2) nach Anspruch 7, **dadurch gekennzeichnet, dass** das Uhrenkleidungsstück ein Uhrenarmband ist.

9. Uhrenkleidungsstück (2) nach Anspruch 4, **dadurch gekennzeichnet, dass** das Uhrenkleidungsstück (2) aus einer Verbundstruktur besteht, die die technische Stickerei (6) und ein verfestigtes Harz (4) umfasst und die integrierte Radiofrequenzschaltung (8) umschließt.

10. Uhrenkleidungsstück (2) nach Anspruch 9, **dadurch gekennzeichnet, dass** das Uhrenkleidungsstück (2) ein Stück ist, das aus der Gruppe ausgewählt ist, die eine Uhrenlünette, ein Uhrenarmband, ein Uhrenzifferblatt und ein Gehäusemittelteil einer Uhr aufweist.

## Claims

1. Method for manufacturing an external horological part (2) comprising an antenna arrangement (6) consisting of a technical embroidery connected to a radio-frequency integrated circuit (8), the technical embroidery (6) comprising an embroidered structure of insulating threads, such as glass fibres, synthetic threads and ceramic fibres, or natural fibres (10), such as linen, hemp or cotton or a combination of these components, and at least one conductive thread (12) embroidered so as to produce a fine winding integrated into said embroidered structure of insulating threads or natural fibres (10), the method comprising the following steps of:
- adjusting (20) the technical embroidery (6) in a mould of the external horological part to be produced, and connecting said at least one conductive thread (12) to a radio-frequency integrated circuit (8) inserted in the mould;
- injecting (22) a resin (4) into the mould so as to impregnate the technical embroidery (6) and the radio frequency integrated circuit (8);
- curing (24) the resin (4) contained in the mould;
- cross-linking (26) the resin (4) contained in the mould; and
- removing (28) the assembly formed by the technical embroidery (6), the radio frequency integrated circuit (8) and the cross-linked resin (4).

2. Method according to claim 1, **characterised in that** the resin (4) is a thermosetting resin, and **in that**, during the step (24) of curing the resin, the curing temperature is between 200°C and 250°C.

3. Method according to claim 1, **characterised in that** the resin (4) is an elastomer resin, and **in that**, during the step (24) of curing the resin, the curing temperature is substantially equal to 300°C.

4. External horological part (2) obtained by the manufacturing method according to one of the preceding claims, and comprising an antenna arrangement (6) and a radio-frequency integrated circuit (8) for a timepiece (1), at least one conductive thread (12) of the antenna arrangement being connected to the radio-frequency integrated circuit (8).

5. External horological part (2) according to claim 4, **characterised in that** the radio-frequency integrated circuit (8) is a contactless communication chip, in particular an RFID radio identification chip or an NFC near-field communication chip.

6. External horological part (2) according to claim 4, **characterised in that** the radio-frequency integrated circuit (8) is an NFC near-field communication chip for carrying out banking transactions or payments.

7. External horological part (2) according to claim 4, **characterised in that** the external horological part is made of a flexible structure, in particular a fabric structure.

8. External horological part (2) according to claim 7, **characterised in that** the external horological part is a watch bracelet.

9. External horological part (2) according to claim 4, **characterised in that** the external horological part (2) is constituted by a composite structure comprising the technical embroidery (6) and a solidified resin (4), and enclosing the radio-frequency integrated circuit (8).

10. External horological part (2) according to claim 9, **characterised in that** the external horological part (2) is a part chosen from the group consisting of a watch bezel, a watch bracelet, a watch dial and a watch case middle.
